# EUROPEAN PATENT APPLICATION

(11) **EP 1 950 084 A1**
(43) Date of publication of application: **30.07.2008**
(21) Application number: 07001387.5
(22) Date of filing: 23.01.2007
(51) Int. Cl.: B60N 2/56, B60H 1/00

(54) **Method for controlling a seat climate system, and seat climate control module**

(71) Applicant: VALEO SYSTEMES THERMIQUES, 78321 Le Mesnil St Denis Cedex (FR); W.E.T. AUTOMOTIVE SYSTEMS AG, 85235 Odelzhausen (DE)
(72) Inventor: Rochelle, Laurent, 78990 Elancourt (FR); Feuillard, Vincent, 78320 Le Mesnil St. Denis (FR); Barat, Didier, 78690 Les Essarts Le Roi (FR); Krobok, Martin, 86551 Aichach (DE)
(74) Representative: Sties, Jochen

(57) **Abstract**

A method for controlling a seat climate system is described, the seat climate system comprising an inlet (18) for cooled air provided by an air conditioning unit, an inlet (20) for cabin air, a blower (26), a control flap (24), an air diffusing system (34) and at least one temperature sensor (44), wherein the seat temperature is controlled by calculating a target temperature on the basis of an input from a control means, determining a seat temperature, determining a correction value and controlling at least the blower (26) and the flap (24) on the basis of the above determinations. Further described is a seat climate control module for controlling a seat climate system, the seat climate system comprising an inlet (18) for cooled air provided by an air conditioning unit, an inlet (20) for cabin air, a blower (26), a control flap (24), an air diffusion system (34) and at least one temperature sensor (44), the seat climate control module comprising a target calculation module, a seat temperature measurement module, and a correction module.

## Description

The invention relates to a method for controlling a seat climate system and to a seat climate control module for controlling a seat climate system.

In order to satisfy increasing demands of vehicle occupants as regards comfort, seat climate systems are becoming more and more popular. Standard systems use electrical heating pads which allow to heat the seating surface and the backrest of a seat when the vehicle is started in a cold condition. In order to be able to cool the seat, systems are known which use cold air provided by an air conditioning unit, in order to cool the seating surface and the backrest of the seat.

The object of the invention is to provide a method for controlling a seat climate system and a seat climate control module, which allow to precisely adjust the temperature of the seat to a target value while keeping the complexity of the system at a reasonable level.

To this end, the invention provides a method for controlling a seat climate system, the seat climate system comprising an inlet for cooled air provided by an air conditioning unit, an inlet for cabin air, a blower, a control flap, an air diffusing system and at least one temperature sensor, wherein the seat temperature is controlled by calculating a target temperature on the basis of an input from a control means, determining a seat temperature, determining a correction value and controlling at least the blower and the flap on the basis of the above determinations. This method allows to rapidly cool down the seat surface and then to maintain the temperature at a constant value. Thereby, it can be avoided that the seat becomes too cold after a while, which would be uncomfortable for the vehicle occupant.

According to a preferred embodiment of the invention, at least one heating pad is provided which is also controlled on the basis of the determinations. The provision of heating pads allows to not only cool the seat, but also to heat the seat. In particular, it allows to maintain a certain temperature of the seat by simultaneously providing cold air and a heating action of the heating pads.

Preferably, the heating pad is operated in one of two modes, namely an off-mode and a mode with partial performance. It has been found that two modes of operation are sufficient for controlling the temperature of the seat and for maintaining a target value of the temperature.

According to a preferred embodiment of the invention, the blower is operated in one of three different modes, namely in an oft-mode, a mid-speed mode and a full-speed mode. Here again, it has been found out that just a few fixed modes of operation are sufficient for cooling or heating the seat to the desired temperature and then maintaining this temperature.

According to a preferred embodiment of the invention, the flap is operated in one of two modes, namely in a cold air mode and a cabin air mode. Using these two modes allows to precisely control the seat temperature.

The invention also provides a seat climate control module for controlling a seat climate system, the seat climate system comprising an inlet for cooled air provided by an air conditioning unit, an inlet for cabin air, a blower, a control flap, an air diffusion system and at least one temperature sensor, the seat climate control module comprising a target calculation module, a seat temperature measurement module, and a correction module. This control module allows to precisely control and adjust the temperature of the seat to a desired value independent from the control for the cabin temperature.

Preferably, the target calculation module is provided with input from a mode of operation switch. This can be a turning knob by which the vehicle occupant can select one of several cooling modes and one of several heating modes.

In general, a single temperature sensor can be used. According to a preferred embodiment of the invention however, the seat temperature measurement module is provided with input from two or more temperature sensors, the seat temperature measurement module using the lowest of the input values. This embodiment is based on the recognition that the temperature sensed by the temperature sensors may be effected by the temperature of the body of the vehicle occupant sitting on the seat. In order to avoid that the sensors do not measure the temperature of the seat as such, but the temperature of the seat influenced by the temperature of the body of the vehicle occupant, the temperature sensors are preferably arranged at locations which most likely do not come into contact with the body of the vehicle occupant. Furthermore, if more than one temperature sensor is present, the lowest temperature value of the temperature sensors is used as this temperature is the one which is most likely the correct value.

According to a preferred embodiment of the invention, the seat climate control module has an output for operating at least one heating pad arranged in the seat. The heating pad allows to heat the seat so that together with the cooling effect achieved with the cooled air provided by the air conditioning unit, any target temperature can be precisely maintained.

Advantageous features of the invention are defined in the subclaims.

The invention will now be described with reference to the enclosed drawings. In the drawings,
- Figure 1 schematically shows a portion of a vehicle with an air conditioning unit, a vehicle seat and a seat climate system associated with the seat,
- Figure 2 schematically a mode of operation switch,
- Figure 3 a diagram of the seat climate control module,
- Figure 4 schematically a seat climate system in a first condition,
- Figure 5 schematically the seat climate system in a second condition,
- Figure 6 schematically the seat temperature measurement module,
- Figure 7 the target temperature of the seat as compared to the actual seat temperature,
- Figure 8 a table showing modes of operation of the seat climate system,
- Figure 9 a comparison between target temperature of the seat, actual seat temperature and cabin temperature,
- Figure 10 the mode of operation of the blower, the flap and the heating pad in a cool-down mode,
- Figure 11 schematically the correction module,
- Figure 12 schematically the flap control,
- Figure 13 schematically the blower control,
- Figure 14 schematically the heating pad control,
- Figure 15 schematically a simplified seat climate control module, and
- Figure 16 a table of the modes of operation of the seat climate control module according to Figure 15.

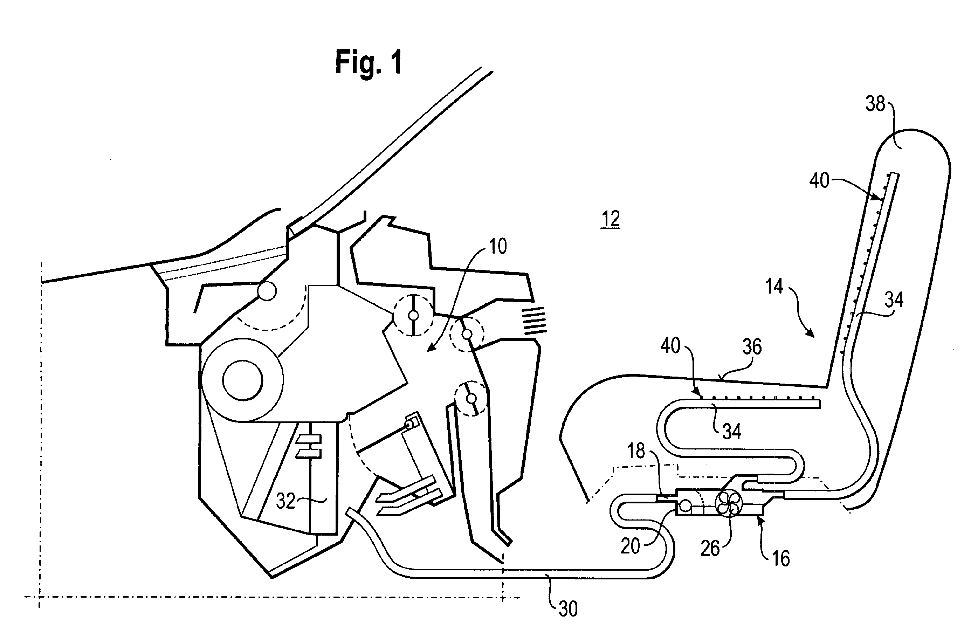

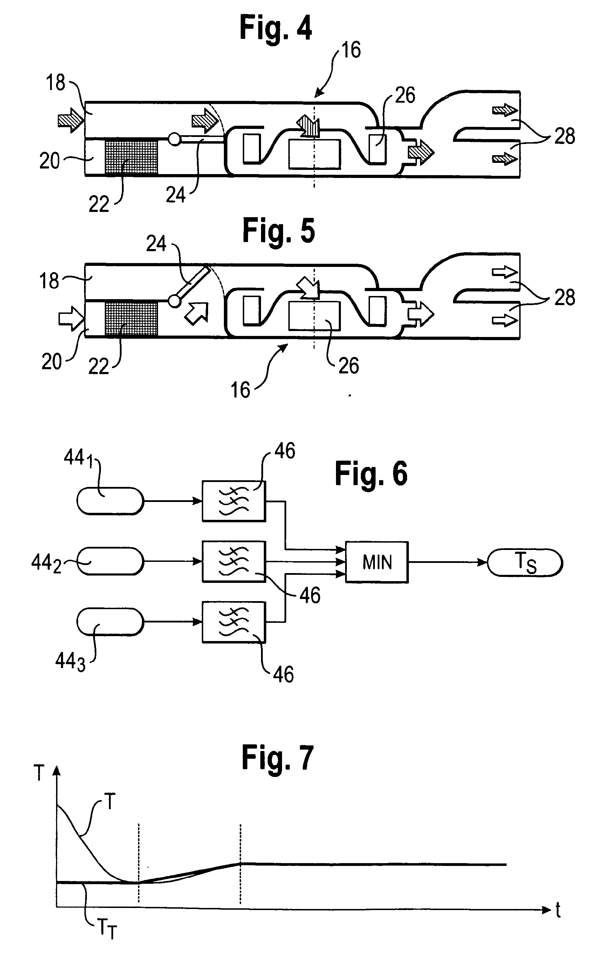

Figure 1 shows an air conditioning unit 10 which is used for controlling the temperature of the air inside a cabin 12 of a vehicle. Inside the vehicle cabin, a seat 14 is arranged. Seat 14 comprises a seat climate module 16 which is used for controlling the temperature of the vehicle seat 14. Seat climate module 16 has an inlet 18 for cooled air (please see also Figures 4 and 5), an inlet 20 for cabin air, a filter 22 arranged in inlet 20 for cabin air, a control flap 24 associated both inlets 18, 20, a blower 26, and two outlets 28. Inlet 18 for cooled air is connected via a duct 30 to the air conditioning 10 at a location where cooled air is provided, namely downstream an evaporator 32. Outlets 28 of the seat climate module 16 are connected to air diffusers 34 which are arranged below the seating surface 36 of the seat 14 and within backrest 38. Associated with air diffusers 34 are two heating pads 40.

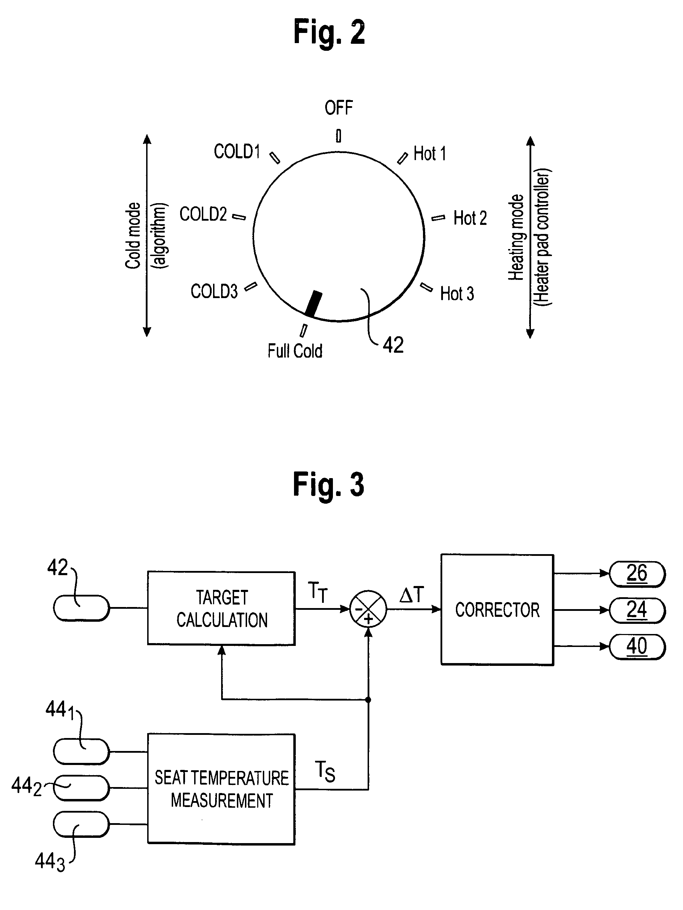

Associated with the seat climate module 16 is a mode of operation switch 42 (please see Figure 2) which allows a vehicle occupant to set the mode of operation of the seat climate module 16. In particular, the occupant can choose between four cooling modes, an off-mode, and three heating modes. In the heating mode, the operation of the heating pads is controlled by a heating pad controller. This is done in a conventional manner and will not be explained in detail hereinafter as the invention relates in particular to the cooling modes.

If the vehicle occupant chooses one of the cooling modes, the temperature of the seat is controlled with the seat climate control module which is schematically shown in Figure 3. It comprises a target calculation module which receives the input from the mode of operation switch 42. Further, a seat temperature measurement module is provided which receives input from three seat temperature sensors 44₁ to 44₃ (please see Figure 6) which are arranged at suitable locations at the vehicle seat. In particular, the temperature sensors 44 are arranged at locations which will most likely not come into contact with the body of a vehicle occupant sitting on the vehicle seat. This prevents that the temperature measured by the respective sensor is falsified by the temperature of the body of the vehicle occupant. Suitable locations for the sensors might be the upper portion of the backrest or locations at the junction between seating surface and backrest. The signal of each of the seat temperature sensors 44 is processed with a low pass filter 46, and the seat temperature measurement module considers the lowest of the values provided by the sensors as seat temperature T_{S}, as it is presumed that the lowest of the values is the one which is most likely the correct one, i.e. that is not disturbed by the skin temperature of the vehicle occupant.

Especially, shortly after an occupant has seated itself on a heated up vehicle seat, the seat surface temperatures in areas which are in contact with the body of the occupant are remarkably lower than in areas with no contact to the passenger.

The seat climate control module further comprises a correction module which, depending on the temperature difference ΔT between the target temperature T_{T} and the actual seat temperature T_{S}, determines how the components of the seat climate module 16 are to be operated. Flap 24 can be operated between two positions, a first position shown in Figure 4 in which inlet 20 for cabin air is closed so that cooled air is admitted via input 18 for cooled air, and a second position shown in Figure 5 in which inlet 18 for cooled air is closed so that cabin air through input 20 is admitted into the seat climate module. Blower 26 can be operated either in an off-mode, a mid-speed mode and a full-speed mode. Heating pads 40 can be operated in two modes, namely an off-mode and a mode with partial performance. The mode with partial performance is realized with pulse width modulation at 0.1 Hz (period is 10 seconds). The partial performance corresponds to 20 % of the maximum performance.

Figure 7 shows an example of a target temperature T_{T} determined by the target calculation module and shown in a bold line, and the actual temperature T present at the seat and shown in a thin line. In a first period of time, the target temperature T_{T} is set at a first level. Thereafter, there is a second, transitory period of time in which the target temperature is slowly rising. Thereafter, there is a third period of time in which the target temperature is constant. The reduced temperature during the first period of time can be considered as an overshoot which emphasizes for the vehicle occupant the cooling effect provided by the system.

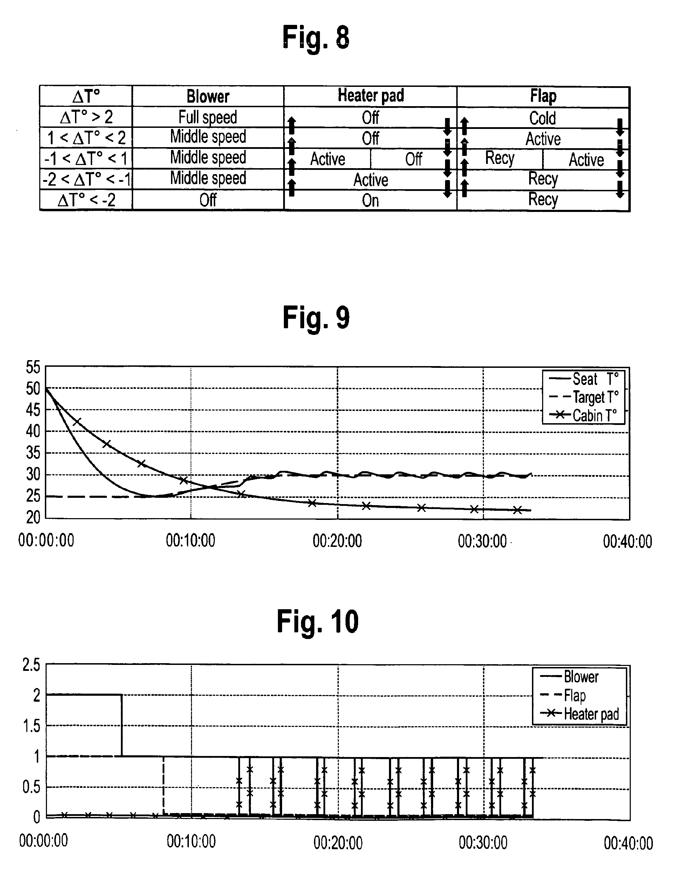

Figure 8 shows a look-up table which contains information on the mode of operation of the blower, the heating pad and the control flap, as operated by the correction module of the seat climate control module. Assuming that the actual seat temperature T is high, as this is the case if the vehicle is started after being parked in plain sunshine, the difference ΔT between the target temperature T_{T} and the actual seat temperature T is large. In this condition, the blower is operated at full speed, the heating pad is in the off-mode, and the control flap is in the cold air mode. This results in only cooled air provided by the air conditioning unit 10 being admitted to the seat climate module 16 and blown out by air diffusers 34. Accordingly, the seat temperature quickly decreases, as can be seen in Figure 7 for the first portion of the curve showing the actual seat temperature T. As the actual seat temperature T comes close to the target temperature T_{T}, the blower is switched to the mid-speed mode, and the heating pad remains in the off-mode. As soon as the seat temperature T is below the target temperature T_{T}, control flap 24 is switched from the cold air mode to the cabin air mode, whereby the cooling effect is reduced. At approximately the same time, the second portion of the curve for the target temperature T_{T} has been reached, in which the target temperature is raised. In the third portion of the curve of the target temperature, a constant seat temperature is achieved by maintaining control flap 24 in the cabin air mode, operating blower 26 at mid-speed and by operating the heating pads in a mode with partial performance.

These modes together with the actual seat temperature T resulting therefrom can be seen in Figures 9 and 10. In Figure 10, a value of "0" represents the off-mode for the heating pads and the blower, and the cabin air mode for the control flap. A value of "1" represents the mid-speed mode of the blower, the cold air mode of the control flap and the mode with partial performance of the heating pads. A value of "2" represents the full speed mode of the blower.

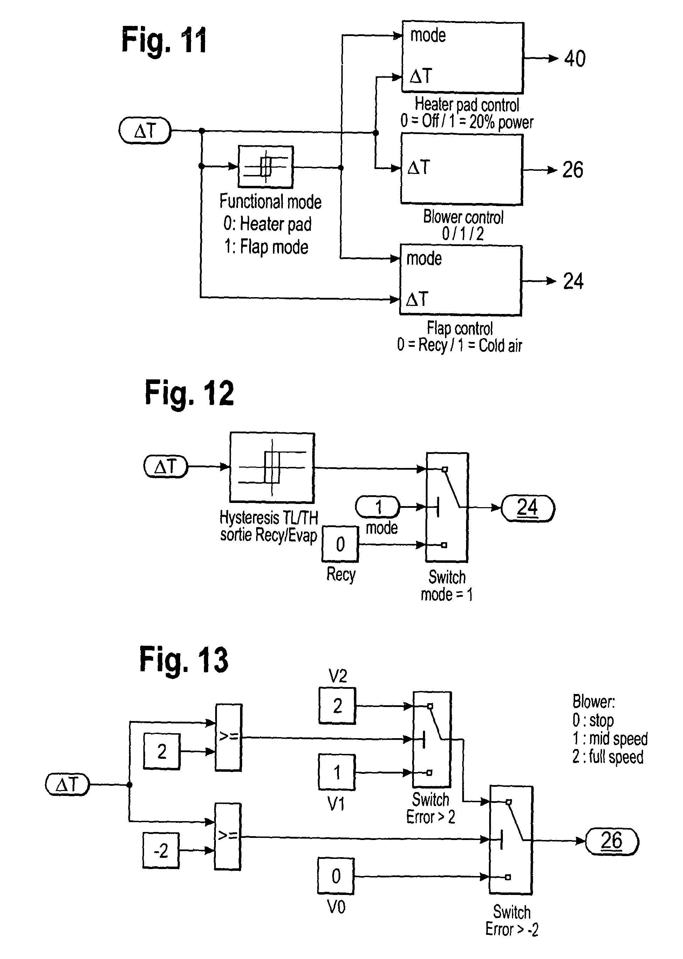

Figure 11 shows a diagram how control flap 24, blower 26 and heating pads 40 are controlled depending on the difference AT between the actual temperature T of the seat and the target temperature T_{T}, and depending on the direction in which ΔT is changing (please see Figure 8).

Figure 12 schematically shows the control for control flap 24. A hysteresis depending on AT is created for the control flap, with the control flap switching from the cold air mode to the cabin air mode at AT being -0.5°C, whereas the flap being switched from the cabin air mode to the cold air mode at ΔT being +0.5°C.

Figure 13 schematically shows the control for blower 26. It is controlled depending on the difference ΔT between the target temperature T_{T} and the actual seat temperature T.

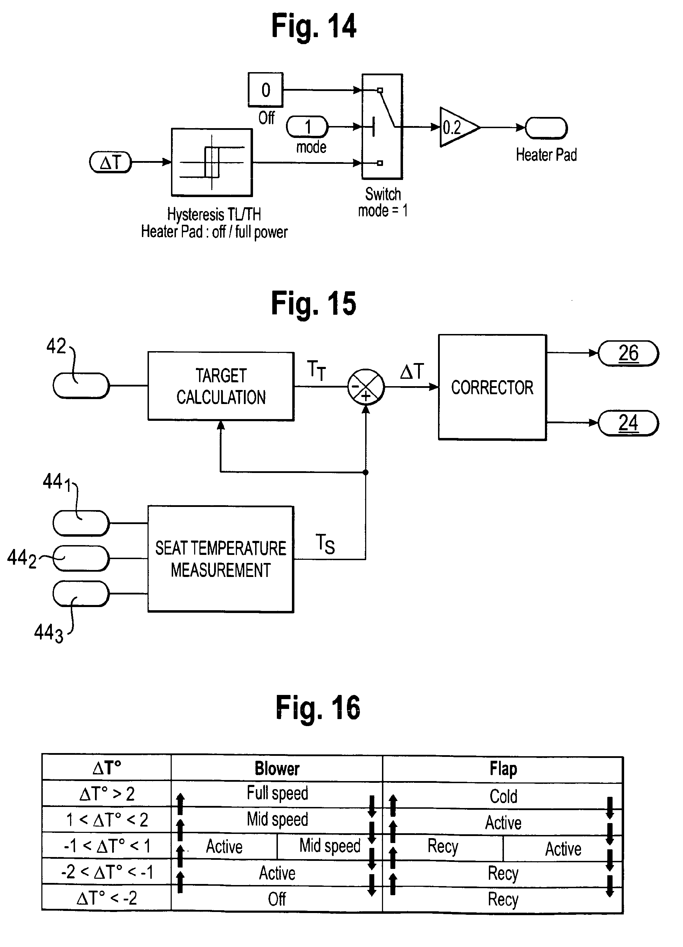

Figure 14 schematically shows the control for the heating pads. Here again, a hysteresis is used for distinguishing between an operating condition in which ΔT is changing from negative values to positive values, and a second condition in which ΔT is changing from positive values to negative values. At a ΔT of -0.5°C, the heating pads are switched on, and at a ΔT of 0.5°C, the heating pads are switched off.

In summary, there are four configurations of the correction module, depending on the situation.

In a first situation in which the seat temperature is very low, the object is to rapidly increase the surface temperature of the seat. Accordingly, control flap 24 is in the cabin air mode, blower 26 is in the off-mode, and heating pads 40 are in an on-mode. This situation is defined as being present as long as the seat temperature is below T_{T} - 2°C.

In a second situation in which the seat temperature is very high, the object is to rapidly cool down the surface temperature of the seat. Accordingly, control flap 24 is in the cold air mode, blower 26 is in the full-speed mode, and the heating pads are in the off-mode. This situation is defined as being present when the seat temperature is above T_{T} + 2°C.

A third situation is present when the seat temperature is close to the target temperature T_{T} and when the seat needs a positive heat flow in order to maintain the surface temperature at the desired temperature. This situation is designated as "mode 0" (please see Figures 11, 12 and 14). In this situation, flap 24 is in the cabin air mode, blower 26 is in the mid-speed mode, and heating pads 40 are controlled between the off-mode and the mode with partial performance.

A fourth situation is present when the seat temperature is close to the target temperature, but the needs a negative heat flow to be maintained to the desired temperature. This situation is designated as "mode 1" and consists of flap 24 being controlled between the cabin air mode and the cold air mode, blower 26 being at the mid-speed mode, and heating pads 40 being switched off.

The system switches from mode 0 to mode 1 when the seat temperature is greater than target temperature T_{T} + 1°C. The system switches from mode 1 to mode 0 when the seat temperature is below target temperature T_{T} - 1°C.

Figure 15 shows a simplified solution which has no heating pads. This solution uses the heat flow provided by the body of the vehicle occupant to reheat the seat when blower 26 is stopped. The four configurations of the system are apparent from the table shown in Figure 16.

## Claims

1. A method for controlling a seat climate system, the seat climate system comprising an inlet (18) for cooled air provided by an air conditioning unit, an inlet (20) for cabin air, a blower (26), a control flap (24), an air diffusing system (34) and at least one temperature sensor (44), wherein the seat temperature is controlled by calculating a target temperature on the basis of an input from a control means, determining a seat temperature, determining a correction value and controlling at least the blower and the flap on the basis of the above determinations.

2. The method of claim 1 wherein at least one heating pad (40) is provided which is also controlled on the basis of the determinations.

3. The method of claim 2 wherein the heating pad (40) is operated in one of two modes, namely an off mode and a mode with partial performance.

4. The method of claim 3 wherein the heating pad (40), in the mode with partial performance, is operated in a PWM mode.

5. The method of claim 4 wherein the heating pad (40), in the mode with partial performance, is operated with 20% of the maximum performance.

6. The method of any of the preceding claims wherein the blower (26) is operated in one of three different modes, namely in an off mode, a mid speed mode and a full speed mode.

7. The method of any of the preceding claims wherein the control flap (24) is operated in one of two modes, namely a cold air mode and a cabin air mode.

8. A seat climate control module for controlling a seat climate system, the seat climate system comprising an inlet (18) for cooled air provided by an air conditioning unit, an inlet (20) for cabin air, a blower (26), a control flap (24), an air diffusion system (34) and at least one temperature sensor (44), the seat climate control module comprising a target calculation module, a seat temperature measurement module, and a correction module.

9. The seat climate control module of claim 8 wherein the target calculation module is provided with input from a mode of operation switch (42).

10. The seat climate control module of claim 8 or claim 9 wherein the seat temperature measurement module is provided with input from two or more temperature sensors (44), the seat temperature measurement module using the lowest of the input values.

11. The seat climate control module of any of claims 8 to 10 wherein the correction module uses a look-up table for determining the operation of components of the seat climate system.

12. The seat climate control module of any of claims 8 to 11 wherein it has an output for operating at least one heating pad (40) arranged in the seat.
